(19) Europäisches Patentamt
European Patent Office
Office européen des brevets

(11) EP 2 868 675 B1

(12) EUROPEAN PATENT SPECIFICATION

(45) Date of publication and mention of the grant of the patent:
**21.09.2016 Bulletin 2016/38**

(21) Application number: **13809597.1**

(22) Date of filing: **24.06.2013**

(51) Int Cl.:
***C08F 214/22*** *(2006.01)* ***B29C 47/06*** *(2006.01)*
***B32B 27/30*** *(2006.01)* ***C08F 220/26*** *(2006.01)*

(86) International application number:
**PCT/JP2013/067215**

(87) International publication number:
**WO 2014/002935 (03.01.2014 Gazette 2014/01)**

(54) **MOLDED ARTICLE**

FORMKÖRPER

OBJET MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2012 JP 2012145517**

(43) Date of publication of application:
**06.05.2015 Bulletin 2015/19**

(73) Proprietor: **Kureha Corporation**
**Chuo-ku**
**Tokyo 103-8552 (JP)**

(72) Inventors:
- **SAKAI, Yuki**
  **Tokyo 103-8552 (JP)**
- **IGARASHI, Tamito**
  **Tokyo 103-8552 (JP)**
- **KAMATA, Shintarou**
  **Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**EP-A1- 1 586 592**
**EP-A1- 1 992 646**
**EP-A1- 2 226 338**
**WO-A1-87/07208**
**WO-A1-2012/090876**
**JP-A- H06 172 452**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a molded article, and particularly relates to a molded article obtained from specified vinylidene fluoride-based copolymers.

BACKGROUND OF THE INVENTION

Vinylidene fluoride-based resins have excellent chemical resistance, weather resistance and stain resistance and are used as molded materials such as films and sheets, or as paints and binder bases. Because a layer made of vinylidene fluoride-based resin has excellent oil permeation resistance in addition to excellent weather resistance and oil resistance, it has been proposed to form an oil supply tube that runs from an automobile gasoline tank to the engine by laminating such a layer with a layer made of another thermoplastic resin such as polyamide resin or polyolefin resin (for example, refer to Patent Documents 1 to 4). Furthermore, the laminate described above is employed because of the excellent oil resistance and oil permeation resistance of vinylidene fluoride-based resin and the excellent mechanical characteristics of the other thermoplastic resin.

However, fluorine-based resins such as vinylidene fluoride resins have poor adhesion with other thermoplastic resins, as is also understood from their excellent stain resistance. For this reason, in the aforementioned conventional technology, various means are employed, such as surface treatment of fluorine-based resin (Patent Document 1), insertion of an adhesive agent layer (Patent Document 2), and surface treatment of resin by y ray grafting of fluorine resin by maleic anhydride (Patent Documents 3 and 4), but sufficient adhesion has not been obtained.

On the other hand, to improve adhesion with substrates, copolymers of vinylidene fluoride and unsaturated dibasic acid monoesters have also been proposed (for example, refer to Patent Document 5). In Patent Document 5, however, the vinylidene fluoride copolymer was developed for forming paints, adhesives or binders in the solution state. Resin sheets made of copolymers of vinylidene fluoride and unsaturated dibasic acid monoesters have also been proposed (for example, see Patent Document 6), but in Patent Documents 5 and 6, discoloration resistance when the copolymer of vinylidene fluoride and unsaturated dibasic acid monoester was molded was not sufficiently examined.

PRIOR ART DOCUMENTS

Patent Documents

Patent Document 1: Japanese Unexamined Patent Application Publication No. H06-31877A
Patent Document 2: Japanese Unexamined Patent Application Publication No. H06-15790A
Patent Document 3: Japanese Unexamined Patent Application Publication No. 2005-162330A
Patent Document 4: Japanese Unexamined Patent Application Publication No. 2005-207582A
Patent Document 5: Japanese Unexamined Patent Application Publication No. H06-172452A
Patent Document 6: WO 2009/084483

SUMMARY OF THE INVENTION

Problem to be Solved by the Invention

The object of the present invention is to provide a molded article obtained by melt molding of a vinylidene fluoride-based copolymer having excellent adhesion with other thermoplastic resins as well as improved molding characteristics and discoloration resistance. Means for solving the problem

As a result of diligent research to achieve the above object, the present inventors discovered that a vinylidene fluoride-based copolymer can solve the above problems, and they achieved the present invention.

That is to say, the molded article of the present invention is obtained by melt molding a vinylidene fluoride-based copolymer obtained by copolymerizing vinylidene fluoride and a compound represented by formula (1) below.

[Formula 1]

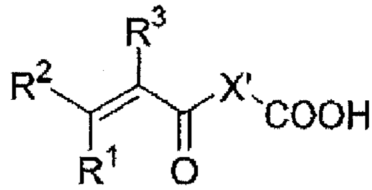

・・・(1)

In formula (1), $R^1$, $R^2$ and $R^3$ are each independently a hydrogen atom, a chlorine atom or an alkyl group having from 1 to 5 carbon atoms, and X' is an atomic group of molecular weight not greater than 472, the main chain of which is constructed of from 1 to 19 atoms. The compounds represented by formula (1) are preferably compounds represented by formula (2) below, and are more preferably at least one compound selected from acryloyloxyethyl succinate and carboxyethyl acrylate.

[Formula 2]

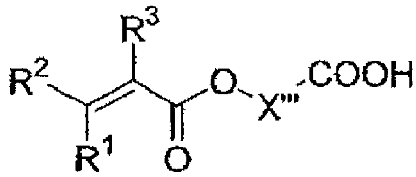

・・・(2)

In formula (2), $R^1$, $R^2$ and $R^3$ are each independently a hydrogen atom, a chlorine atom or an alkyl group having from 1 to 5 carbon atoms, and X''' is an atomic group of molecular weight not greater than 456, the main chain of which is constructed of 1 to 18 atoms. The inherent viscosity of the above vinylidene fluoride-based copolymers is preferably from 0.3 to 5.0 dL/g.

The absorbance ratio ($A_R$) expressed by equation (I) below obtained by measuring the infrared absorption spectrum of the above vinylidene fluoride-based copolymers is preferably from 0.01 to 3.0.

$$A_R = A_{1700\text{-}1800}/A_{3023} \quad \cdots \quad (I)$$

In equation (I), $A_{1700\text{-}1800}$ is absorbance originating from stretching vibration of carbonyl groups detected in the range from 1700 to 1800 $cm^{-1}$, and $A_{3023}$ is absorbance originating from CH stretching vibration of CH detected near 3023 $cm^{-1}$. Examples of the molded article are sheets, films, strands, fibers and tubes.

The molded article preferably has a layer obtained by melt molding the above vinylidene fluoride-based copolymers and a layer formed from a thermoplastic resin other than the above vinylidene fluoride-based copolymers.

It is preferred that the layer obtained by melt molding the above vinylidene fluoride-based copolymers and the layer formed from a thermoplastic resin other than the above vinylidene fluoride-based copolymers are molded by coextrusion.

It is also preferred that the layer obtained by melt molding the above vinylidene fluoride-based copolymers and the layer formed from a thermoplastic resin other than the above vinylidene fluoride-based copolymers are molded by lamination.

Effect of the Invention

Because the molded article of the present invention is obtained by melt molding specified vinylidene fluoride-based copolymers, and those copolymers have excellent adhesion with other thermoplastic resins, it has excellent adhesion between layers when the molded article of the present invention has a multilayer structure of a layer formed from a vinylidene fluoride-based copolymer and a layer formed from another thermoplastic resin. Additionally, the molded article of the present invention is advantageously produced because the specified vinylidene fluoride-based copolymers have better molding characteristics and discoloration resistance than conventional vinylidene fluoride-based copolymers.

DETAILED DESCRIPTION OF THE INVENTION

The present invention will now be described in detail.
The molded article of the present invention is obtained by melt molding a vinylidene fluoride-based copolymer obtained by copolymerizing vinylidene fluoride and a compound represented by formula (1) below.

(Vinylidene fluoride-based copolymer)

The vinylidene fluoride-based copolymer of the present invention is obtained by copolymerizing vinylidene fluoride and a compound represented by formula (1) below.

[Formula 3]

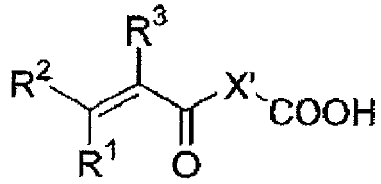

・・・(1)

In formula (1), $R^1$, $R^2$ and $R^3$ are each independently a hydrogen atom, a chlorine atom or an alkyl group having from 1 to 5 carbon atoms, and X' is an atomic group of molecular weight not greater than 472, the main chain of which is constructed of from 1 to 19 atoms. The vinylidene fluoride-based copolymer used in the present invention is a polymer having a vinylidene fluoride-derived constituent unit and a constituent unit derived from a compound expressed by formula (1). It may also have constituent units derived from other monomers.

Because the vinylidene fluoride-based copolymers used in the present invention have a constituent unit derived from a compound represented by formula (1), they have excellent adhesion to other resins. The compounds represented by formula (1) are preferably compounds represented by formula (2) below. In the vinylidene fluoride-based copolymer that uses a compound represented by formula (1), because a carboxyl group that functions as an adhesive functional group is separated from the vinylidene fluoride polymer main chain via a spacer, the degree of freedom of carboxyl group arrangement is high. The present inventors surmised that, as a result, this functional group readily takes on an arrangement in which it readily demonstrates its adhesion-conferring capability.

[Formula 4]

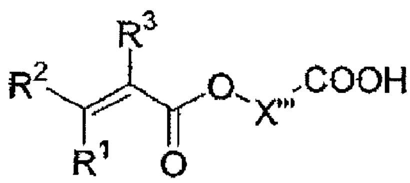

・・・(2)

In formula (2), $R^1$, $R^2$ and $R^3$ each independently a hydrogen atom, a chlorine atom or an alkyl group having from 1 to 5 carbon atoms, and X''' is an atomic group of molecular weight not greater than 456, the main chain of which is constructed of 1 to 18 atoms.
In the above formulas (1) and (2), $R^1$, $R^2$ and $R^3$ are each independently a hydrogen atom, a chlorine atom or an alkyl group having from 1 to 5 carbon atoms, but from the viewpoint of polymerization reactivity, it is particularly desirable that $R^1$ and $R^2$ are substituents with little steric hindrance, and they are preferably a hydrogen atom or an alkyl group having from 1 to 3 carbon atoms, and more preferably a hydrogen atom or a methyl group.

In formula (1), the molecular weight of the atomic group represented by X' is not greater than 472, but is preferably not greater than 172. The lower limit of the molecular weight of the atomic group represented by X' is not particularly limited, but normally, X' has the form $-CH_2-$; that is, it has a molecular weight of 14.

In formula (2), the molecular weight of the atomic group represented by X''' is not greater than 456, but is preferably not greater than 156. The lower limit of the molecular weight of the atomic group represented by X''' is not particularly limited, but normally, X''' has the form $-CH_2-$; that is, it has a molecular weight of 14.

From the viewpoint of polymerization reactivity, it is preferable that the molecular weights of the atomic groups represented by X' and X"' are in the ranges described above.

In formula (1), in the atomic group represented by X', the main chain is constructed of 1 to 19 atoms, preferably 1 to 14 atoms, and more preferably 1 to 9 atoms.

In formula (2), in the atomic group represented by X"', the main chain is constructed of 1 to 18 atoms, preferably 1 to 13 atoms, and more preferably 1 to 8 atoms.

From the viewpoint of polymerizability, it is preferable that the number of atoms of the main chains is in the ranges described above.

Note that the number of atoms of the main chain in formulas (1) and (2) means the number of atoms of the skeleton portion of a chain by which the carboxyl group denoted on the right side of X' or X"' and the group denoted on the left side ($R^1R^2C=CR^3$-CO-, (formula (1))), ($R^1R^2C=CR^3$-COO-, (formula (2))) are connected with the fewest atoms.

The number of atoms of the main chains of the 2-acryloyloxyethyl succinate (AES) and 2-carboxyethyl acrylate (CEA) used in the working examples are as follows.

AES is equivalent to a compound represented by formula (1) and a compound represented by formula (2). If the compound represented by formula (1) is AES, the atomic group represented by X' is $-OCH_2CH_2O-(CO)-CH_2CH_2-$. The number of atoms of the main chain of this atomic group is the number of atoms of the skeleton portion of that straight chain. That is to say, the oxygen atom of the carbamoyl group and the hydrogen atoms of the methylene group are not counted in the number of atoms. Specifically, the skeleton portion of the straight chain is -OCCO-C-CC-, and the number of carbons thereof is 7. If the compound represented by formula (2) is AES, the number of atoms of the main chain of the atomic group represented by X"' is 6.

CEA is equivalent to a compound represented by formula (1) and a compound represented by formula (2). If the compound represented by formula (1) is CEA, the number of atoms of the main chain of the atomic group represented by X' is 3, and if the compound represented by formula (2) is CEA, the number of atoms of the main chain of the atomic group represented by X"' is 2.

The number of atoms of the main chain of acryloyloxyethyl phthalate is as follows. Acryloyloxyethyl phthalate is the compound represented by formula (B), and is equivalent to a compound represented by formula (1) and a compound represented by formula (2). If the compound represented by formula (1) is acryloyloxyethyl phthalate, the atomic group represented by X' is represented by formula (B') below. The number of atoms of the main chain of the atomic group is the number of atoms of the skeleton portion of a chain by which the carboxyl group to bond to the atomic group and the group denoted on the left side ($CH_2$=CH-CO-) are connected with the fewest atoms. That is to say, in formula (B') below, the number of atoms of the skeleton portion by which the carboxyl group and the group denoted on the left side ($CH_2$=CH-CO-) are connected may be considered to be 7 shown in formula (B'-1) or the 11 shown in formula (B'-2), but in this case, the number of atoms of the main chain is the smaller number, 7. Similarly, if the compound represented by formula (2) is acryloyloxyethyl phthalate, the number of atoms of the main chain of the atomic group represented by X"' is 6.

Furthermore, the number of atoms of the main chain of a compound having a plurality of carboxyl groups is as follows. For example, in a compound having a plurality of carboxyl groups, a chain by which the group denoted on the left side and the carboxyl group are connected with the fewest atoms is present for each of the carboxyl groups, but the fewest atoms of the skeleton portion among them is used as the number of atoms of the main chain. That is to say, in a compound having two carboxyl groups, a chain by which the group denoted on the left side and the carboxyl group are connected with the fewest atoms exists for each of the carboxyl groups (hereinafter referred to as carboxyl group A and carboxyl group B for convenience), but when, for example, the number of atoms of the skeleton portion of the chain that connects the group denoted on the left side and carboxyl group A with the fewest atoms is 3 and the number of atoms of the skeleton portion of the chain that connects the group denoted on the left side and carboxyl group B with the fewest atoms is 6, the number of atoms of the main chain in this compound is 3. The compound represented by formula (C) below will be described as a specific example. The compound represented by formula (C) is equivalent to a compound represented by formula (1) and a compound represented by formula (2). The compound represented by formula (C) has two carboxyl groups. When the compound represented by formula (1) is the compound represented by formula (C), the number of atoms of the skeleton portion by which the carboxyl group and the group denoted on the left side ($CH_2$=CH-CO-) are connected may be considered to be the 5 atoms shown in formula (C-1) or the 7 atoms shown in formula (C-2), but in this case, the number of atoms of the main chain is the smaller number, 5. If the compound represented by formula (2) is the compound represented by formula (C), the number of atoms of the main chain of the atomic group represented by X"' is 4.

[Formula 5]

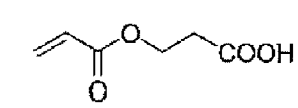

CEA

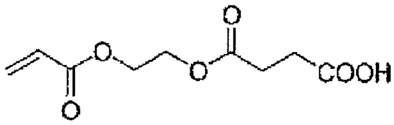

AES

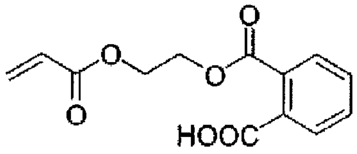

(B)

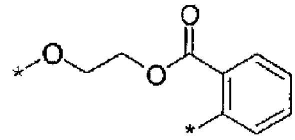

(B')

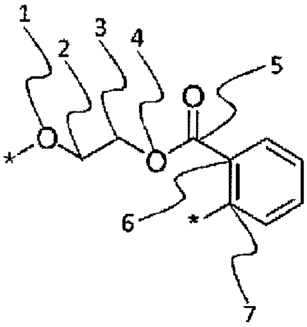

(B'-1)

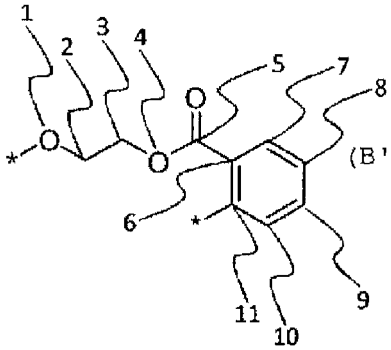

(B'-2)

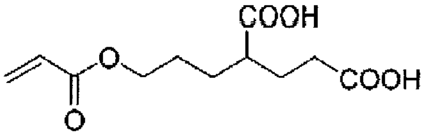

(C)

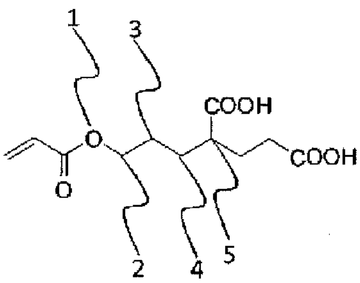

(C-1)

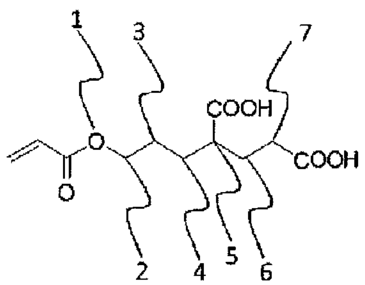

(C-2)

Note that in the present invention, (meth)acrylic and (meth)acrylate signify acrylic, and/or methacrylic and acrylate and/or methacrylate, respectively.

Examples of the compound represented by formula (2) are 2-carboxyethyl acrylate, 2-carboxyethyl methacrylate, acryloyloxyethyl succinate, methacryloyloxyethyl succinate, acryloyloxyethyl phthalate and methacryloyloxyethyl phthalate, among which 2-carboxyethyl acrylate, 2-carboxyethyl methacrylate, acryloyloxyethyl succinate and methacryloyloxyethyl succinate are preferred due to their excellent ability to copolymerize with vinylidene fluoride.

The vinylidene fluoride-based copolymer used in the present invention preferably has from 0.01 to 10 mol%, more preferably from 0.02 to 7 mol%, and particularly preferably from 0.03 to 4 mol%, of constituent units derived from compounds represented by formula (1) when the total of constituent units derived from vinylidene fluoride and constituent units derived from compounds represented by formula (1) is taken as 100 mol%. Furthermore, the vinylidene fluoride-based copolymer preferably has from 90 to 99.99 mol%, more preferably from 93 to 99.98 mol%, and particularly preferably from 96 to 99.97 mol%, of constituent units derived from vinylidene fluoride.

The quantity of constituent units derived from compounds represented by formula (1) and the quantity of constituent units derived from vinylidene fluoride in the vinylidene fluoride-based copolymer used in the present invention may normally be determined by $^1$H NMR spectrum or neutralization titration of the vinylidene fluoride-based copolymer.

Examples of other monomers are fluorine-based monomers and hydrocarbon-based monomers such as ethylene and propylene that are copolymerizable with vinylidene fluoride, and monomers that are copolymerizable with the compounds of formula (1). Examples of fluorine-based monomers that are copolymerizable with vinylidene fluoride include vinyl fluoride, trifluoroethylene, tetrafluoroethylene, chlorotrifluoroethylene, hexafluoropropylene, and perfluoroalkyl vinyl ethers represented by perfluoromethyl vinyl ether. Examples of monomers that are copolymerizable with the

compounds of formula (1) include (meth)acrylic acid and alkyl (meth)acrylate compounds represented by methyl(meth)acrylate. Furthermore, one type of these other monomers may be used alone, or two or more types may be used.

If the vinylidene fluoride-based copolymer used in the present invention has a constituent unit derived from the above other monomers, it preferably has from 0.01 to 10 mol% of that constituent unit derived from the above other monomers, when the constituent units derived from all monomers that constitute the copolymer is taken as 100 mol%.

The vinylidene fluoride-based copolymer used in the present invention is obtained by copolymerizing vinylidene fluoride and a compound represented by formula (1), and, as necessary, the above other monomers.

The method of copolymerizing the vinylidene fluoride-based copolymer used in the present invention is not particularly limited, but is normally a method such as suspension polymerization, emulsion polymerization or solution polymerization. From the viewpoint of ease of posttreatment, suspension polymerization in an aqueous system and emulsion polymerization are preferred, and suspension polymerization in an aqueous system is particularly preferred.

In suspension polymerization using water as the dispersion medium, a suspending agent such as methylcellulose, methoxy methylcellulose, propoxy methylcellulose, hydroxy ethylcellulose, polyvinyl alcohol, polyethylene oxide or gelatin is added in the range of 0.005 to 1.0 parts by mass, and preferably of 0.01 to 0.4 parts by mass, per 100 parts by mass of total monomer used in copolymerization (vinylidene fluoride and compounds represented by formula (1), and other monomers copolymerized as necessary).

Examples of polymerization initiators that can be used include, diisopropyl peroxy dicarbonate, dinormal propyl peroxy dicarbonate, dinormal heptafluoropropyl peroxy dicarbonate, isobutyryl peroxide, di(chlorofluoroacyl)peroxide, di(perfluoroacyl)peroxide and t-butyl peroxy pivalate. The used quantity thereof is from 0.05 to 5 parts by mass, and preferably from 0.15 to 2 parts by mass, when the total monomer used in copolymerization (vinylidene fluoride and compounds represented by formula (1), and other monomers copolymerized as necessary) is taken as 100 parts by mass.

Additionally, a chain transfer agent such as ethyl acetate, methyl acetate, diethyl carbonate, acetone, ethanol, n-propanol, acetaldehyde, propylaldehyde, ethyl propionate or carbon tetrachloride may be added to adjust the degree of polymerization of the obtained vinylidene fluoride-based copolymer. If a chain transfer agent is used, the used quantity thereof is from 0.1 to 5 parts by mass, and preferably from 0.5 to 3 parts by mass, when the total monomer used in copolymerization (vinylidene fluoride and compounds represented by formula (1), and other monomers copolymerized as necessary) is taken as 100 parts by mass.

The ratio of the quantity of all monomers (vinylidene fluoride and compounds represented by formula (1), and other monomers copolymerized as necessary) used in copolymerization to water is normally from 1:1 to 1:10, and preferably from 1:2 to 1:5.

The polymerization temperature T is selected as appropriate according to the 10-hour half-life temperature $T_{10}$ of the polymerization initiator, and is normally selected in the range of $T_{10}$ - 25°C ≤ T ≤ $T_{10}$ + 25°C. For example, $T_{10}$ of t-butyl peroxy pivalate and diisopropyl peroxy dicarbonate are 54.6°C and 40.5°C, respectively (refer to product catalog of NOF Corporation). Therefore, in polymerization using t-butyl peroxy pivalate or diisopropyl peroxy dicarbonate as a polymerization initiator, the polymerization temperature T is selected as appropriate in the range of 29.6°C ≤ T ≤ 79.6°C or 15.5°C ≤ T ≤ 65.5°C, respectively. The polymerization time is not limited, but not greater than 100 hours is preferred in view of the productivity. The polymerization is normally performed under an increased pressure, and the pressure during polymerization is preferably from 2.0 to 8.0 MPa-G.

By performing suspension polymerization in an aqueous system under the above conditions, vinylidene fluoride and compounds represented by formula (1) and other monomers copolymerized as necessary can be easily copolymerized, and the vinylidene fluoride-based copolymer of the present invention can be obtained.

The inherent viscosity (logarithmic viscosity at 30°C of a solution obtained by dissolving 4 g of resin in 1 liter of N,N-dimethylformamide; similarly hereinafter) is preferably a value in the range of 0.3 to 5.0 dL/g, more preferably of 0.5 to 4.0 dL/g, and particularly preferably of 0.5 to 3.0 dL/g. The viscosity in the above range is preferred because the mechanical strength of the molded article is excellent and molding, such as extrusion molding, is easy.

Inherent viscosity $\eta_i$ may be calculated by dissolving 80 mg of vinylidene fluoride-based copolymer in 20 mL of N,N-dimethylformamide, and using an Ubbelohde viscometer in a 30°C thermostatic bath, with the following formula.

$$\eta_i = (1/C) \cdot \ln (\eta/\eta_0)$$

Here, $\eta$ is the viscosity of the polymer solution, $\eta_0$ is the viscosity of N,N-dimethylformamide alone, and C is 0.4 g/dL.

As expressed by equation (I) below, the absorbance ratio ($A_R$) when the infrared absorption spectrum of the vinylidene fluoride-based copolymer is measured is preferably from 0.01 to 3.0, more preferably from 0.05 to 2.0, and particularly preferably from 0.08 to 1.5. A value in this range is preferred because it results in excellent adhesion and molding characteristics of the vinylidene fluoride-based copolymer. Measurement of the infrared absorption spectrum of the polymer is performed by measuring the infrared absorption spectrum of a film produced by hot pressing the

polymer. Specifically, the vinylidene fluoride-based copolymer is hot pressed at 200°C to produce a 30 mm × 30 mm pressed sheet, and the IR spectrum of this pressed sheet is measured in the range from 1500 $cm^{-1}$ to 4000 $cm^{-1}$ using infrared spectrophotometer FT-730 (made by Horiba, Ltd.).

$$A_R = A_{1700\text{-}1800}/A_{3023} \quad \cdot\cdot\cdot \quad (I)$$

In above equation (I), $A_{1700\text{-}1800}$ is absorbance originating from stretching vibration of carbonyl groups detected in the range from 1700 to 1800 $cm^{-1}$, and $A_{3023}$ is absorbance originating from stretching vibration of CH detected near 3023 $cm^{-1}$. $A_R$ serves as a standard that indicates the quantity of carbonyl groups present in the vinylidene fluoride-based copolymer.

Furthermore, the randomness of the constituent units derived from the compounds represented by formula (1) in the vinylidene fluoride-based copolymer used in the present invention is preferably not less than 40%, more preferably not less than 50%, and particularly preferably not less than 60%. Although the details are unclear, the uniformity of the polymer chain is improved and the carboxyl groups can demonstrate their adhesion-conferring capability more effectively if randomness is within this range. Thus, this range is preferred.

In the present invention, randomness is an index that indicates to what degree the constituent units derived from compounds represented by formula (1) present in the vinylidene fluoride-based copolymer used in the present invention are dispersed in the polymer chain. The lower the randomness, the greater the tendency to have a chain in which the constituent units derived from the compound represented by formula (1) are present in a series; in other words, the compound represented by formula (1) is polymerized with itself. In contrast, the higher the randomness, the greater the tendency to have a chain in which the constituent units derived from the compound represented by formula (1) are present independently; in other words, the constituent units derived from the compound represented by formula (1) are bonded to constituent units derived from vinylidene fluoride and are not present in a series.

The randomness of the vinylidene fluoride-based copolymer used in the present invention may be determined by dividing the present quantity (mol%) of polymer chain derived from the compounds represented by formula (1) by the present quantity (mol%) of constituent units derived from the compounds represented by formula (1) (randomness (%) = present quantity (mol%) of polymer chain derived from the compounds represented by formula (1)/ present quantity (mol%) of constituent units derived from the compounds represented by formula (1) × 100). Note that the present quantity of constituent units derived from vinylidene fluoride is taken as 100 mol%. The present quantity of polymer chain derived from the compounds represented by formula (1) may be determined by $^{19}F$ NMR spectrum, and the present quantity of constituent units derived from the compounds represented by formula (1) may be determined by, for example, $^{1}H$ NMR spectrum or neutralization titration.

For example, if the vinylidene fluoride-based copolymer used in the present invention is a copolymer of vinylidene fluoride and carboxyethyl acrylate, randomness may be determined by the following method. In the $^{19}F$ NMR spectrum, the $CF_2$ peak adjacent to the carboxyethyl acrylate unit is observed near -94 ppm. The mol% of carboxyethyl acrylate chain is determined from the integral ratio of this peak to all peaks in the spectrum. Randomness may be determined as the ratio of the mol% of carboxyethyl acrylate chain to the mol% of constituent units derived from all carboxyethyl acrylate in the polymer determined by $^{1}H$ NMR spectrum or neutralization titration (randomness (%) = mol% of carboxyethyl acrylate chain/mol% of constituent units derived from all carboxyethyl acrylate × 100).

An example of a method for producing a vinylidene fluoride-based copolymer used in the present invention that has randomness within the above range is to continuously add the compound represented by formula (1) when performing the suspension polymerization or the like described above.

(Molded article)

The molded article of the present invention is obtained by melt molding powder or pellets of the above vinylidene fluoride-based copolymers.

The molded article of the present invention may be a single-layer molded article consisting of only a layer formed from the above vinylidene fluoride-based copolymers, or it may be a multilayer molded article having a layer formed from the above vinylidene fluoride-based copolymers and layers formed from other materials. In either case, when producing the molded article of the present invention, the vinylidene fluoride-based copolymer is melt molded. Melt molding in the present invention means molding via a state in which the vinylidene fluoride-based copolymer has been melted. The specific melt molding method is not particularly limited, but examples include extrusion molding, injection molding, transfer molding, blow molding, compression molding and rotational molding. When the structure has a layer formed from another material, that layer may be formed by melt molding or by another method.

Examples of other materials include metals, paper, wood, resins other than the above vinylidene fluoride-based

copolymers and the like, but from the viewpoint of adhesion with the vinylidene fluoride-based copolymer, metals and resins are preferred, and resins are more preferred.

Furthermore, other materials may be used together with various additives and the like. For example, if the other material is a resin other than the above vinylidene fluoride-based copolymers, the resin may be used alone or as a resin composition.

If the other material is a metal, the layer formed from the other material may be a metal substrate, or may be a metal film formed by vapor deposition on the layer formed from vinylidene fluoride-based copolymer. A metal film or metal layer may be formed by sputtering or lamination on the layer formed from vinylidene fluoride-based copolymer, or a molded article may be obtained by insert molding.

Additionally, when the vinylidene fluoride-based copolymer is formed by melt molding, melt molding may be performed together with resins other than the above vinylidene fluoride-based copolymers and additives. That is to say, a composition containing the vinylidene fluoride-based polymer may be melt molded.

Both thermoplastic resins other than the above vinylidene fluoride-based copolymers and thermosetting resins can be used as resins other than the above vinylidene fluoride-based copolymers. Examples of thermoplastic resins other than the above vinylidene fluoride-based copolymers that can be used include polyolefins, polyesters, polyurethanes, polyamides, polycarbonates, cyclic polyolefins, ethylene-polyvinyl alcohol copolymers, polyaromatic vinyl resins, chlorine-containing resins, fluorine-containing resins other than the above vinylidene fluoride-based copolymers and acrylic resins. Examples of thermosetting resins that can be used include epoxy resins, phenol resins, melamine resins and thermosetting polyester resins. One type of these resins may be used alone, or two or more types may be used.

Examples of polyolefins include polyethylene, polypropylene, ethylene-vinyl acetate copolymer and ethylene-methyl methacrylate copolymer. Polyolefin-based elastomers may also be used. Note that in the present invention, polyolefin means a polymer having not less than 50% repeating units derived from olefin, which may also have repeating units derived from other monomers. The polyolefin preferably has not less than 70 mol% repeating units derived from olefin, and more preferably not less than 90 mol%.

Examples of polyesters include aliphatic polyesters such as polylactate (also abbreviated as PLA hereinafter) and polybutylene succinate, and aromatic polyesters such as polyethylene terephthalate and polybutylene terephthalate. Soft polyester elastomers may also be used.

Examples of the above polyamides are nylons. As nylons, those obtained by a polycondensation reaction (n-nylon) and those obtained by a co-condensation polymerization reaction (n,m-nylon) may be used. Examples of n-nylons that may be used include nylon 6, nylon 11 and nylon 12; examples of n,m-nylons that may be used include nylon 66, nylon 610, nylon 6T, nylon 61, nylon 9T, nylon M5T and nylon MXD6. Soft polyamide elastomers may also be used.

Various additives may be contained in the layer formed from the above vinylidene fluoride-based copolymers and in the layers formed from other materials. The additives may be selected as appropriate depending on the type and application of the molded article. Examples include heat stabilizers, plasticizers, inorganic fillers, catalyst inactivators, heat ray absorbents, ultraviolet ray absorbents, photostabilizers, desiccants, waterproofing agents, water-repellent agents, lubricants, crystal nucleation agents, coupling agents, pigments and dyes.

Plasticizers selected as appropriate from known plasticizers may be used. Specific examples of plasticizers include ethylene glycol, trimethylene glycol, propylene glycol, tetramethylene glycol, 1,3-butanediol, 2,3-butanediol, pentamethylene glycol, hexamethylene glycol, diethylene glycol, triethylene glycol, polyethylene glycol, polyvinyl alcohol, ethylene-vinyl alcohol copolymers, polyethylene oxide, sorbitol, mannitol, dulcitol, erythritol, glycerin, lactic acid, fatty acids, starches and phthalic acid esters. These may also be used in a mixture as necessary.

If the molded article of the present invention has a multilayer structure, its layer structure is not particularly limited, but examples include a two-layer structure of a layer formed from vinylidene fluoride-based copolymer and a layer formed from another material; a three-layer structure of a layer formed from vinylidene fluoride-based copolymer, a layer formed from another material, and a layer formed from vinylidene fluoride-based copolymer; and a four-layer structure of a layer formed from vinylidene fluoride-based copolymer, a layer formed from another material, a layer formed from vinylidene fluoride-based copolymer, and a layer formed from another material. To provide the multilayer molded article with the weather resistance and oil resistance that vinylidene fluoride-based copolymers possess, it is preferred that at least one of the surface layers is formed from a vinylidene fluoride-based copolymer.

The shape of the molded article of the present invention is not particularly limited, but it is a shape that can be used in various applications in which conventional vinylidene fluoride-based polymers have been used by being processed by melt molding such as extrusion molding, injection molding, transfer molding, blow molding, compression molding or rotational molding. Preferred examples of the molded article of the present invention are sheets, films, strands, fibers and tubes.

The production method of the molded article of the present invention is not particularly limited, but may be selected as appropriate in accordance with the shape of the molded article, and with whether or not it has a multilayer structure.

The form of the starting material in production of the molded article of the present invention is not particularly

limited, but melt molding of pellets is preferred from the viewpoints of stabilizing the quantity of resin supplied to the molder during melt molding and stabilizing the extruded quantity. That is to say, the desired molded article is preferably produced by melt molding the vinylidene fluoride-based copolymer into pellets, and then melt molding the pellets.

The molded article of the present invention preferably has a layer obtained by melt molding the above vinylidene fluoride-based copolymers and a layer formed from a thermoplastic resin other than the above vinylidene fluoride-based copolymers, which utilizes the excellent adhesion that the above vinylidene fluoride-based copolymers possess. As the method for producing the molded article, it may be produced by coextrusion of a layer obtained by melt molding the above vinylidene fluoride-based copolymers and a layer formed from a thermoplastic resin other than the above vinylidene fluoride-based copolymers, or, it may be produced by lamination of a layer obtained by melt molding the above vinylidene fluoride-based copolymers and a layer formed from a thermoplastic resin other than the above vinylidene fluoride-based copolymers.

When a sheet or film having a layer obtained by melt molding the above vinylidene fluoride-based copolymers and a layer formed from a thermoplastic resin other than the above vinylidene fluoride-based copolymers is produced, it may be produced by producing a sheet or film by independent melt extrusion of the vinylidene fluoride-based copolymers or a composition containing the copolymers, and then joining (laminating) it by hot melt adhesion or via an adhesive agent layer onto a separately created sheet or film made of a thermoplastic resin other than the above vinylidene fluoride-based copolymers; or it may be produced by melt extruding the vinylidene fluoride-based copolymers or a composition containing the vinylidene fluoride-based copolymers on a sheet or film made of a thermoplastic resin other than the above vinylidene fluoride-based copolymers - that is, melt lamination; or it may be produced by producing a sheet or film by independent melt extrusion of the vinylidene fluoride-based copolymers or a composition containing the copolymers, and then melt extruding a thermoplastic resin other than the above vinylidene fluoride-based copolymers onto the sheet or film - that is, extrusion lamination. A sheet or film may also be produced by coextruding the above vinylidene fluoride-based copolymers or a composition containing the copolymers with a thermoplastic resin other than the above vinylidene fluoride-based copolymers. When coextrusion is performed, a single screw or twin screw extruder corresponding to the number of extruded resins and a multilayer T die corresponding to the number of layers may be used.

When a tube having a layer obtained by melt molding of the above vinylidene fluoride-based copolymers and a layer formed from a thermoplastic resin other than the above vinylidene fluoride-based copolymers is produced, it is normally difficult to integrate the layers after each layer is created separately. Thus, a tube may be produced by, for example, coextruding the above vinylidene fluoride-based copolymers or composition containing the copolymers with the thermoplastic resin other than the above vinylidene fluoride-based copolymers. When coextrusion is performed, a single screw or twin screw extruder corresponding to the number of extruded resins and an annular die (mandrel if necessary) corresponding to the number of layers may be used.

The specific dimensions of the molded article of the present invention are not particularly limited, but, for example, when the molded article is a sheet made from only a layer obtained by melt molding a vinylidene fluoride-based copolymer, thickness is normally from 0.2 to 5 mm; when the molded article is a sheet having a laminate structure, the thickness of the layer obtained by melt molding a vinylidene fluoride-based copolymer is normally from 0.01 to 3 mm, and the total sheet thickness is from 0.2 to 5 mm. When the molded article is a film made from only a layer obtained by melt molding a vinylidene fluoride-based copolymer, thickness is normally from 0.001 to 0.2 mm; when the molded article is a film having a laminate structure, the thickness of the layer obtained by melt molding a vinylidene fluoride-based copolymer is normally from 0.001 to 0.01 mm, and the total film thickness is from 0.002 to 0.5 mm. When the molded article is a tube made from only a layer obtained by melt molding a vinylidene fluoride-based copolymer, the thickness of that layer is normally from 0.1 to 100 mm; when the molded article is a tube having a laminate structure, the thickness of the layer obtained by melt molding a vinylidene fluoride-based copolymer is normally from 0.01 to 10 mm, and the total thickness of all layers that constitute the tube is from 0.2 to 100 mm. The inside diameter of the tube is normally from 0.1 to 500 mm.

## EXAMPLES

The present invention will now be described in further detail with reference to examples, but the present invention is not limited by these examples.

[Production example 1]

(Production of vinylidene fluoride-carboxyethyl acrylate copolymer)

1000 g of ion exchanged water, 0.6 g of METOLOSE SM-100 (made by Shin-Etsu Chemical Co., Ltd.) as a cellulose-based suspension agent, 0.2 g of carboxyethyl acrylate (CEA), 6 g of 50 wt% diisopropyl peroxy dicarbonate-Freon 225cb solution, 400 g of vinylidene fluoride, and 16 g of ethyl acetate were put in an autoclave with an internal

volume of 2 liters, and were heated up to 26°C for 1 hour.

After that, 70 g/L carboxyethyl acrylate aqueous solution was gradually added at a rate of 0.05 g/minute while the temperature was maintained at 26°C. A total of 3.1 g of carboxyethyl acrylate was added, including the quantity added initially.

Polymerization was stopped at the same time that addition of carboxyethyl acrylate solution was ended, and polymerization was performed for a total of 14.8 hours from the start of heating. After polymerization was ended, the polymer slurry was heat treated for 60 minutes at 95°C, after which it was dehydrated, washed with water, and then dried for 20 hours at 80°C, and polymer powder of vinylidene fluoride-carboxyethyl acrylate copolymer was obtained.

The polymer yield was 65%, the inherent viscosity of the obtained polymer was 0.95 dL/g, and the absorbance ratio ($A_R$) of the obtained polymer was 0.48.

The $^1$H NMR spectrum of the polymer powder was determined under the following conditions.

Apparatus: AVANCE AC 400FT NMR spectrometer made by Bruker Corp.

Measurement Conditions

Frequency: 400 MHz

Measurement solvent: DMSO-$d_6$

Measurement temperature: 25°C

The quantity of constituent units derived from vinylidene fluoride and the quantity of structural units derived from carboxyethyl acrylate in the polymer were calculated based on the integrated intensities of the signal observed by $^1$H NMR spectrum at 4.19 ppm originating mainly from carboxyethyl acrylate and the signals obtained at 2.24 ppm and 2.87 ppm originating mainly from vinylidene fluoride.

The quantity (mol%) of structural units derived from vinylidene fluoride (VDF quantity) possessed by the obtained vinylidene fluoride-based copolymer was 99.6 mol%, and the quantity (mol%) of structural units derived from carboxyethyl acrylate (CEA quantity) was 0.4 mol%.

[Production Example 2]

(Production of vinylidene fluoride-acryloyloxyethyl succinate copolymer)

1000 g of ion exchanged water, 0.6 g of METOLOSE SM-100 (made by Shin-Etsu Chemical Co., Ltd.) as a cellulose-based suspension agent, 0.2 g of acryloyloxyethyl succinate (AES), 6 g of 50 wt% diisopropyl peroxy dicarbonate-Freon 225cb solution, 400 g of vinylidene fluoride, and 8 g of ethyl acetate were put in an autoclave with an internal volume of 2 liters, and were heated up to 26°C for 1 hour.

After that, 100 g/L acryloyloxyethyl succinate aqueous solution was gradually added at a rate of 0.05 g/minute while the temperature was maintained at 26°C. A total of 1.48 g of acryloyloxyethyl succinate was added, including the quantity added initially.

Polymerization was stopped at the same time that addition of acryloyloxyethyl succinate aqueous solution was ended, and polymerization was performed for a total of 7.7 hours from the start of heating.

After polymerization was ended, the polymer slurry was heat treated for 60 minutes at 95°C. Then, it was dehydrated, washed with water, and dried for 20 hours at 80°C, and polymer powder of vinylidene fluoride-acryloyloxyethyl succinate copolymer was obtained.

The polymer yield was 35%, the inherent viscosity of the obtained polymer was 1.29 dL/g, and the absorbance ratio ($A_R$) of the obtained polymer was 0.68.

The $^1$H NMR spectrum of the above polymer powder was measured by the same method as production example 1.

The quantity of constituent units derived from vinylidene fluoride and the quantity of structural units derived from acryloyloxyethyl succinate in the polymer were calculated based on the integrated intensities of the signal observed by $^1$H NMR spectrum at 4.18 ppm originating mainly from acryloyloxyethyl succinate and the signals obtained at 2.23 ppm and 2.87 ppm originating mainly from vinylidene fluoride.

The quantity (mol%) of structural units derived from vinylidene fluoride (VDF quantity) possessed by the obtained vinylidene fluoride-based copolymer was 99.7 mol%, and the quantity (mol%) of structural units derived from acryloyloxyethyl succinate (AES quantity) was 0.3 mol%.

[Production example 3]

(Production of vinylidene fluoride homopolymer)

1040 g of ion exchanged water, 0.2 g of METOLOSE SM-100 (made by Shin-Etsu Chemical Co., Ltd.) as a cellulose-based suspension agent, 2 g of n-propyl peroxy dicarbonate, 400 g of vinylidene fluoride, and 8 g of ethyl acetate were put in an autoclave with an internal volume of 2 liters, and were heated up to 26°C for 1 hour.

Polymerization was performed for a total of 22 hours from the start of heating. After polymerization was ended, the polymer slurry was heat treated for 60 minutes at 95°C. Then, it was dehydrated, washed with water, and dried for 20 hours at 80°C, and vinylidene fluoride homopolymer powder was obtained.
The polymer yield was 92%, and the inherent viscosity of the obtained polymer was 1.10 dL/g.

[Production example 4]

(Production of vinylidene fluoride-monomethyl maleate copolymer)

1040 g of ion exchanged water, 0.8 g of METOLOSE SM-100 (made by Shin-Etsu Chemical Co., Ltd.) as a cellulose-based suspension agent, 8 g of 50 wt% diisopropyl peroxy dicarbonate-Freon 225cb solution, 396 g of vinylidene fluoride, 4 g of monomethyl maleate, and 2.5 g of ethyl acetate were put in an autoclave with an internal volume of 2 liters, and were heated up to 28°C for 1 hour.

Polymerization was performed for a total of 45 hours from the start of heating. After polymerization was ended, the polymer slurry was heat treated for 60 minutes at 95°C. Then, it was dehydrated, washed with water, and dried for 20 hours at 80°C, and polymer powder of vinylidene fluoride-monomethyl maleate copolymer was obtained.
The polymer yield was 85%, and the inherent viscosity of the obtained polymer was 1.10 dL/g.

[Production example 5]

(Production of mixture of vinylidene fluoride homopolymer and vinylidene fluoride-monomethyl maleate copolymer)

A mixture of vinylidene fluoride homopolymer and vinylidene fluoride-monomethyl maleate copolymer was obtained by mixing the vinylidene fluoride homopolymer obtained in Production Example 3 and the vinylidene fluoride-monomethyl maleate copolymer obtained in Production Example 4 in a weight ratio of 1:1.

[Production example 6]

(Production of mixture of vinylidene fluoride homopolymer and vinylidene fluoride-monomethyl maleate copolymer)

A mixture of vinylidene fluoride homopolymer and vinylidene fluoride-monomethyl maleate copolymer was obtained by mixing the vinylidene fluoride homopolymer obtained in Production Example 3 and the vinylidene fluoride-monomethyl maleate copolymer obtained in Production Example 4 in a weight ratio of 9:1.

[Measurement of YI (yellowness index)]

YI was measured by the following method for the polymer powders obtained in Production Examples 1 to 4 and for the mixtures obtained in Production Examples 5 and 6.

Test pieces of dimensions 5 cm × 5 cm × 0.1 cm were created by preheating polymer powder (Production Examples 1 to 4) or mixture (Production Examples 5 and 6) for 2 minutes at 210°C and then holding for 2 minutes with a press pressure of 5 MPa.

Test pieces of dimensions 5 cm × 5 cm × 0.1 cm were created by preheating polymer powder (Production Examples 1 to 4) or mixture (Production Examples 5 and 6) for 2 minutes at 230°C and then holding for 2 minutes with a press pressure of 5 MPa.

YI of the obtained test pieces was measured by a method conforming to ASTM D1925 using color meter ZE6000 made by Nippon Denshoku Industries Co., Ltd.
Note that the higher the YI value, the more intense the yellow color.

Additionally, the presence or absence of foaming was observed macroscopically for the test pieces obtained by pressing at 230°C (pressed films).

[Measurement of quantity of generated HF]

The quantity of generated hydrogen fluoride was measured by the following method for the polymer powders obtained in Production Examples 1 to 4 and the mixtures obtained in Production Examples 5 and 6.

The polymer powders (Production Examples 1 to 4) and mixtures (Production Examples 5 and 6) were compacted by pressing (25°C, 100 kg/cm$^2$), and then 0.5 g was measured out in a quartz boat and heated for 2 hours at 230°C in an electric tube furnace. After air flow was supplied at a rate of 100 mL/minute and the generated gas was absorbed by bicarbonate alkali solution, fluorine ions ($F^-$) were quantified by ion chromatography (IC). Based on the quantity of fluorine ions, the quantity of generated HF was calculated, and the quantity of generated HF per gram of polymer powder (Production Examples 1 to 4) or mixture (Production Examples 5 and 6) was calculated.

The production conditions of the polymer powders (Production Examples 1 to 4) and the properties of the polymer powders (Production Examples 1 to 4) and mixtures (Production Examples 5 and 6) are shown in Tables 1 and 2.

[Table 1]

| | Production example 1 | Production example 2 |
|---|---|---|
| Vinylidene fluoride (parts by weight) | 100 | 100 |
| Co-monomer | CEA | AES |
| Initially added quantity (parts by weight) | 0.05 | 0.05 |
| Subsequently added quantity (parts by weight) | 0.73 | 0.32 |
| Subsequently added co-monomer aqueous solution concentration (g/L) | 70 | 100 |
| Inherent viscosity (dL/g) | 0.95 | 1.29 |
| $A_R$ | 0.48 | 0.68 |
| YI (210°C) | 10.8 | 11.2 |
| YI (230°C) | 12.4 | 13.0 |
| Foaming (230°C) | No | No |
| Quantity of generated HF (μg/g) | 200 | 220 |

[Table 2]

| | Production example 3 | Production example 4 | Production example 5 | Production example 6 |
|---|---|---|---|---|
| Vinylidene fluoride (parts by weight) | 100 | 99 | - | - |
| Co-monomer | - | MMM | - | - |
| Initially added quantity (parts by weight) | - | 1 | - | - |
| Subsequently added quantity (parts by weight) | - | - | - | - |
| Subsequently added co-monomer aqueous solution concentration (g/L) | - | - | - | - |
| Inherent viscosity (dL/g) | 1.1 | 1.1 | 1.1 | 1.1 |
| $A_R$ | - | 0.67 | 0.39 | 0.12 |
| YI (210°C) | Not measured | 59.7 | 39.4 | 25.3 |
| YI (230°C) | 5.8 | 92.5 | 67.5 | 40.7 |
| Foaming (230°C) | None | Yes | Yes | None |

(continued)

| | Production example 3 | Production example 4 | Production example 5 | Production example 6 |
|---|---|---|---|---|
| Quantity of generated HF (μg/g) | 160 | 6210 | 2980 | 690 |

[Production Example 7]

(Preparation of olefin resin composition (1))

Pellets of olefin resin composition (1) were produced by supplying 80% by weight high-density polyethylene (HDPE resin) (HI-ZEX 3300F made by Prime Polymer Co., Ltd.) and 20% by weight ethylene-glycidyl methacrylate-vinyl acetate copolymer (Bondfast 2B made by Sumitomo Chemical Co., Ltd.), melt extruding it in the form of a strand from a die with a cylinder temperature from 170 to 210°C, cooling in cold water and then cutting.

[Production Example 8]

(Preparation of olefin resin composition (2))

Pellets of olefin resin composition (2) were produced by supplying 70% by weight high-density polyethylene (HDPE resin) (HI-ZEX 2100J made by Prime Polymer Co., Ltd.) and 30% by weight ethylene-acrylic acid-glycidyl methacrylate copolymer (Lotader GMA AX8900 made by Arkema), melt extruding it in the form of a strand from a die with a cylinder temperature from 170 to 210°C, cooling in cold water and then cutting.

[Working Example 1]

(Production of pellets of vinylidene fluoride-based copolymer)

Pellets were obtained by melt extruding the polymer powder of vinylidene fluoride-carboxyethyl acrylate copolymer obtained in Production Example 1 using a co-rotating twin screw extruder.
The pellets were produced by melt extrusion in the form of a strand from the die with a cylinder temperature from 170 to 250°C, followed by cooling in cold water and then cutting. The appearance of the obtained pellets was milky white.

(Production of laminate sheet by coextrusion)

The pellets of vinylidene fluoride-carboxyethyl acrylate copolymer were supplied to a first extruder, and the pellets of olefin resin composition (1) were supplied to a second extruder, and they were coextruded from a multi-manifold T die connecting the first extruder and second extruder. The side of the first layer (layer made of vinylidene fluoride-carboxyethyl acrylate copolymer) was put in contact with and cooled by a cast roller whose surface was held at 120°C, and a laminate sheet having a 10-μm-thick first layer (layer made of vinylidene fluoride-carboxyethyl acrylate copolymer) and a 50-μm-thick second layer (layer made of olefin resin composition (1)) was obtained.

[Working Example 2]

(Production of pellets of vinylidene fluoride-based copolymer)

Pellets were obtained by melt extruding the polymer powder of vinylidene fluoride-acryloyloxyethyl succinate copolymer obtained in Production Example 2 using a co-rotating twin screw extruder.
The pellets were produced by melt extruding in the form of a strand from a die with a cylinder temperature from 170 to 250°C, cooling in cold water and then cutting. The appearance of the obtained pellets was milky white.

(Production of laminate sheet by coextrusion)

The pellets of vinylidene fluoride-acryloyloxyethyl succinate copolymer were supplied to a first extruder, and the pellets of olefin resin composition (1) were supplied to a second extruder, and they were coextruded from a multi-manifold T die connecting the first extruder and second extruder. The side of the first layer (layer made of vinylidene

fluoride-acryloyloxyethyl succinate copolymer) was put in contact with and cooled by a cast roller whose surface was held at 120°C, and a laminate sheet having a 10-μm-thick first layer (layer made of vinylidene fluoride-acryloyloxyethyl succinate copolymer) and a 50-μm-thick second layer (layer made of olefin resin composition (1)) was obtained.

[Working Example 3]

(Production of pellets of vinylidene fluoride-based copolymer)

Pellets were obtained by melt extruding the polymer powder of vinylidene fluoride-acryloyloxyethyl succinate copolymer obtained in production example 2 using a co-rotating twin screw extruder.

The pellets were produced by melt extruding in the form of a strand from a die with a cylinder temperature from 170 to 250°C, cooling in cold water and then cutting. The appearance of the obtained pellets was milky white.

(Production of single-layer sheet made from vinylidene fluoride-based copolymer)

Using an extruder with the screw diameter of 40 mm, the pellets of vinylidene fluoride-acryloyloxyethyl succinate copolymer were melt kneaded with a cylinder temperature from 190 to 240°C. The melt was extruded from a T die set to a temperature of 230°C and put in contact with and cooled by a cast roller whose surface was held at 120°C, to produce a 100-μm-thick single-layer sheet made of vinylidene fluoride-based copolymer.

(Production of single-layer sheet made from olefin-based resin composition)

Using a single screw extruder, the pellets of olefin resin composition (2) were melt kneaded with a cylinder temperature from 170 to 240°C. The melt was extruded from a T die set to a temperature of 230°C and put in contact with and cooled by a cast roller whose surface was held at 120°C, to produce a 50-μm-thick single-layer sheet made of olefin resin composition (2).

(Production of laminate sheet by lamination)

The single-layer sheet made of vinylidene fluoride-based copolymer and the single-layer sheet made of olefin resin composition (2) were hot pressed using a hot press film laminator at a lamination temperature of 180°C, rolling speed of 1 m/minute and pressure of 2 $kg/cm^2$ to produce a laminate sheet.

[Comparative Example 1]

(Production of pellets of vinylidene fluoride homopolymer)

Pellets were obtained by melt extruding the polymer powder of vinylidene fluoride homopolymer obtained in Production Example 3 using a co-rotating twin screw extruder.

The pellets were produced by melt extruding in the form of a strand from a die with a cylinder temperature from 170 to 250°C, cooling in cold water and then cutting. The appearance of the obtained pellets was milky white.

(Production of laminate sheet by coextrusion)

The pellets of vinylidene fluoride homopolymer were supplied to a first extruder, and the pellets of olefin resin composition (1) were supplied to a second extruder, and they were coextruded from a multi-manifold T die connecting the first extruder and second extruder. The side of the first layer (layer made of vinylidene fluoride homopolymer) was put in contact with and cooled by a cast roller whose surface was held at 120°C, and a laminate sheet having a 10-μm-thick first layer (layer made of vinylidene fluoride homopolymer) and a 50-μm-thick second layer (layer made of olefin resin composition (1)) was obtained.

However, in this laminate sheet, the first layer and the second layer did not substantially adhere.

[Comparative Example 2]

(Production of pellets of vinylidene fluoride homopolymer)

Pellets were obtained by melt extruding the polymer powder of vinylidene fluoride homopolymer obtained in Production Example 3 using a co-rotating twin screw extruder.

The pellets were produced by melt extruding in the form of a strand from a die with a cylinder temperature from 170 to 250°C, cooling in cold water and then cutting. The appearance of the obtained pellets was milky white.

(Production of single-layer sheet made from vinylidene fluoride homopolymer)

Using an extruder with a screw diameter of 40 mm, the pellets of vinylidene fluoride homopolymer were melt kneaded with a cylinder temperature from 190 to 240°C. The melt was extruded from a T die set to a temperature of 230°C and put in contact with and cooled by a cast roller whose surface was held at 120°C, to produce a 100-μm-thick single-layer sheet made of vinylidene fluoride homopolymer.

(Production of single-layer sheet made from olefin-based resin composition)

Using a single screw extruder, the pellets of olefin resin composition (2) were melt kneaded with a cylinder temperature from 170 to 240°C. The melt was extruded from a T die set to a temperature of 230°C and put in contact with and cooled by a cast roller whose surface was held at 120°C, to produce a 50-μm-thick single-layer sheet made of olefin resin composition (2).

(Production of laminate sheet by lamination)

The single-layer sheet made of vinylidene fluoride homopolymer and the single-layer sheet made of olefin resin composition (2) were hot pressed using a hot press film laminator at a lamination temperature of 180°C, rolling speed of 1 m/minute and pressure of 2 $kg/cm^2$ to produce a laminate sheet.

However, in this laminate sheet, the first layer and the second layer did not substantially adhere.

[Comparative Example 3]

(Production of pellets of vinylidene fluoride-monomethyl maleate copolymer)

Pellets were obtained by melt extruding the polymer powder of vinylidene fluoride-monomethyl maleate copolymer obtained in Production Example 4 using a co-rotating twin screw extruder. The appearance of the obtained pellets was deep orange. Then, production of a sheet by extrusion molding was attempted using these pellets, but foaming, melt fracture and die line occurred and continuous operation was difficult, and further evaluation was discontinued.

[Comparative Example 4]

(Production of pellets of mixture)

Pellets were obtained by melt extruding the mixture obtained in Production Example 5 using a co-rotating twin screw extruder.

The pellets were produced by melt extruding in the form of a strand from a die with a cylinder temperature from 170 to 250°C, cooling in cold water and then cutting. The appearance of the obtained pellets was orange.

(Production of laminate sheet by coextrusion)

The pellets of the above mixture were supplied to a first extruder, and the pellets of olefin resin composition (1) were supplied to a second extruder, and they were coextruded from a multi-manifold T die connecting the first extruder and second extruder. The side of the first layer (layer made of the mixture) was put in contact with and cooled by a cast roller whose surface was held at 120°C, and a laminate sheet having a 10-μm-thick first layer (layer made of the mixture) and a 50-μm-thick second layer (layer made of olefin resin composition (1)) was obtained.

[Comparative Example 5]

(Production of pellets of mixture)

Pellets were obtained by melt extruding the mixture obtained in Production Example 5 using a co-rotating twin screw extruder.

The pellets were produced by melt extruding in the form of a strand from the die with a cylinder temperature from 170 to 250°C, cooling in cold water and then cutting. The appearance of the obtained pellets was orange.

(Production of single-layer sheet made from mixture)

Using an extruder with a screw diameter of 40 mm, the pellets of the above mixture were melt kneaded with a cylinder temperature from 190 to 240°C. The melt was extruded from a T die set to a temperature of 230°C and put in contact with and cooled by a cast roller whose surface was held at 120°C, to produce a 100-μm-thick single-layer sheet made of the mixture.

(Production of single-layer sheet made from olefin-based resin composition)

Using a single screw extruder, the pellets of olefin resin composition (2) were melt kneaded with a cylinder temperature from 170 to 240°C. The melt was extruded from a T die set to a temperature of 230°C and put in contact with and cooled by a cast roller whose surface was held at 120°C, to produce a 50-μm-thick single-layer sheet made of olefin resin composition (2).

(Production of laminate sheet by lamination)

The single-layer sheet made of the above mixture and the single-layer sheet made of olefin resin composition (2) were hot pressed using a hot press film laminator at a lamination temperature of 180°C, rolling speed of 1 m/minute and pressure of 2 $kg/cm^2$ to produce a laminate sheet.

[Comparative Example 6]

(Production of pellets of mixture)

Pellets were obtained by melt extruding the mixture obtained in Production Example 6 using a co-rotating twin screw extruder.

The pellets were produced by melt extruding in the form of a strand from the die with a cylinder temperature from 170 to 250°C, cooling in cold water and then cutting. The appearance of the obtained pellets was pale orange.

(Production of laminate sheet by coextrusion)

The pellets of the above mixture were supplied to a first extruder, and the pellets of olefin resin composition (1) were supplied to a second extruder, and they were coextruded from a multi-manifold T die connecting the first extruder and second extruder. The side of the first layer (layer made of the mixture) was put in contact with and cooled by a cast roller whose surface was held at 120°C, and a laminate sheet having a 10-μm-thick first layer (layer made of the mixture) and a 50-μm-thick second layer (layer made of olefin resin composition (1)) was obtained.

[Comparative Example 7]

(Production of pellets of mixture)

Pellets were obtained by melt extruding the mixture obtained in Production Example 6 using a co-rotating twin screw extruder.

The pellets were produced by melt extruding in the form of a strand from the die with a cylinder temperature from 170 to 250°C, cooling in cold water and then cutting. The appearance of the obtained pellets was pale orange.

(Production of single-layer sheet made from mixture)

Using an extruder with a screw diameter of 40 mm, the pellets of the mixture were melt kneaded with a cylinder temperature from 190 to 240°C. The melt was extruded from a T die set to a temperature of 230°C and put in contact with and cooled by a cast roller whose surface was held at 120°C, to produce a 100-μm-thick single-layer sheet made of the mixture.

(Production of single-layer sheet made from olefin-based resin composition)

Using a single screw extruder, the pellets of olefin resin composition (2) were melt kneaded with a cylinder temperature from 170 to 240°C. The melt was extruded from a T die set to a temperature of 230°C and put in contact with and cooled by a cast roller whose surface was held at 120°C, to produce a 50-μm-thick single-layer sheet made of

olefin resin composition (2).

(Production of laminate sheet by lamination)

The single-layer sheet made of the mixture and the single-layer sheet made of olefin resin composition (2) were hot pressed using a hot press film laminator at a lamination temperature of 180°C, rolling speed of 1 m/minute and pressure of 2 kg/$cm^2$ to produce a laminate sheet.

(Measurement of peel strength)

The laminate sheets obtained in the working examples and comparative examples were cut to a length of 100 mm and width of 20 mm, and a 90 degree peel test was conducted at a head speed of 10 mm/minute in conformance with JIS K6854-1 using a tensile tester ("STA-1150" Universal Testing Machine made by Orientec Co., Ltd.).

The peel strength of the laminate sheets obtained in the working examples and comparative examples is shown in Table 3.

[Table 3]

| | Constitution of laminate sheet | Peel strength (gf/cm) |
|---|---|---|
| Working Example 1 | Vinylidene fluoride-carboxyethyl acrylate copolymer//Olefin resin composition (1) | 10.2 |
| Working Example 2 | Vinylidene fluoride-acryloyloxyethyl succinate copolymer//Olefin resin composition (1) | 8.5 |
| Working Example 3 | Vinylidene fluoride-acryloyloxyethyl succinate copolymer//Olefin resin composition (2) | 0.8 |
| Comparative Example 1 | Vinylidene fluoride homopolymer//Olefin resin composition (1) | Did not adhere |
| Comparative Example 2 | Vinylidene fluoride homopolymer//Olefin resin composition (2) | Did not adhere |
| Comparative Example 4 | Mixture (production example 5)//Olefin resin composition (1) | Did not peel |
| Comparative Example 5 | Mixture (production example 5)//Olefin resin composition (2) | 3.6 |
| Comparative Example 6 | Mixture (production example 6)//Olefin resin composition (1) | 10.0 |
| Comparative Example 7 | Mixture (production example 6)//Olefin resin composition (2) | 0.8 |

From the results of the above working examples and comparative examples, the molded article of the present invention has superior interlayer adhesion compared to when vinylidene fluoride homopolymer is used. Furthermore, the vinylidene fluoride-based copolymer used in the present invention has lower YI (yellowness index) and superior discoloration resistance than vinylidene fluoride-monomethyl maleate copolymer. Additionally, the vinylidene fluoride-based copolymer used in the present invention has superior molding characteristics compared to vinylidene fluoride-monomethyl maleate copolymer because the quantity of generated HF is small and foaming is not seen.

## Claims

1. A molded article obtained by melt molding a vinylidene fluoride-based copolymer obtained by copolymerizing vinylidene fluoride and a compound represented by formula (1) below:

[Formula 1]

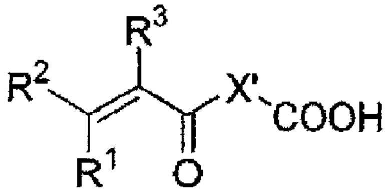

· · · (1)

wherein $R^1$, $R^2$ and $R^3$ are each independently a hydrogen atom, a chlorine atom or an alkyl group having from 1 to 5 carbon atoms, and X' is an atomic group having a molecular weight not greater than 472, a main chain of which is constructed of from 1 to 19 atoms.

**2.** The molded article according to claim 1, wherein the compound represented by formula (1) is a compound represented by formula (2):

[Formula 2]

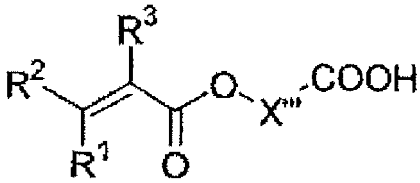

· · · (2)

wherein $R^1$, $R^2$ and $R^3$ are each independently a hydrogen atom, a chlorine atom or an alkyl group having from 1 to 5 carbon atoms, and X''' is an atomic group having a molecular weight not greater than 456, a main chain of which is constructed of from 1 to 18 atoms.

**3.** The molded article according to claim 1, wherein the compound represented by formula (1) is at least one compound selected from acryloyloxyethyl succinate and carboxyethyl acrylate.

**4.** The molded article according to any one of claims 1 to 3, wherein the inherent viscosity (logarithmic viscosity at 30°C of a solution obtained by dissolving 4 g of resin in 1 liter of N,N-dimethylformamide) of the vinylidene fluoride-based copolymer is from 0.3 to 5.0 dL/g.

**5.** The molded article according to any one of claims 1 to 4, wherein an absorbance ratio ($A_R$) expressed by equation (I) below obtained by measuring an infrared absorption spectrum of a vinylidene fluoride-based copolymer is from 0.01 to 3.0:

$$A_R = A_{1700\text{-}1800}/A_{3023} \quad \cdot\cdot\cdot \quad (I)$$

wherein $A_{1700\text{-}1800}$ is absorbance originating from stretching vibration of carbonyl groups detected in a range of 1700 to 1800 $cm^{-1}$, and $A_{3023}$ is absorbance originating from CH stretching vibration of CH detected near 3023 $cm^{-1}$, whereby the infrared absorption spectrum of the polymer is measured in a film produced by hot pressing the vinylidene fluoride-based copolymer at 200°C to produce a 30 mm × 30 mm pressed sheet, and the IR spectrum of this pressed sheet is measured in the range from 1500 cam<-1> to 4000 cam<-1> using infrared spectrophotometer FT-730 made by Horiba, Ltd.

**6.** The molded article according any one of claims 1 to 5, wherein the molded article is a sheet, film, strand, fiber or tube.

**7.** The molded article according to any one of claims 1 to 6, wherein the molded article has a layer obtained by melt molding the vinylidene fluoride-based copolymer and a layer formed from a thermoplastic resin other than the

vinylidene fluoride-based copolymer.

**8.** The molded article according to claim 7, wherein the layer obtained by melt molding the vinylidene fluoride-based copolymer and the layer formed from a thermoplastic resin other than a vinylidene fluoride-based copolymer are molded by coextrusion.

**9.** The molded article according to claim 7, wherein the molded article is molded by laminating the layer obtained by melt molding the vinylidene fluoride-based copolymer and the layer formed from a thermoplastic resin other than a vinylidene fluoride-based copolymer.

**Patentansprüche**

**1.** Formkörper, der durch Schmelzformen eines Copolymers auf der Basis von Vinylidenfluorid erhalten wird, das durch Copolymerisieren von Vinylidenfluorid und einer Verbindung, die durch die Formel (1) unten dargestellt ist, erhalten wird:

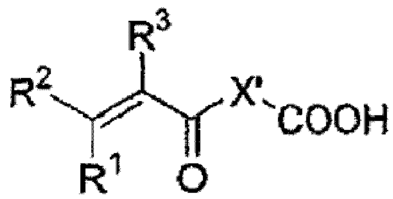

・・・(1)

wobei
$R^1$, $R^2$ und $R^3$ jeweils unabhängig ein Wasserstoffatom, ein Chloratom oder eine Alkylgruppe sind, die 1 bis 5 Kohlenstoffatome aufweist, und X' eine atomare Gruppe ist, die ein Molekulargewicht von nicht mehr als 472 aufweist, eine Hauptkette von welcher aus 1 bis 19 Atomen konstruiert ist.

**2.** Formkörper nach Anspruch 1, wobei die Verbindung, die durch die Formel (1) dargestellt ist, eine Verbindung ist, die durch die Formel (2) dargestellt ist:

[Formula 2]

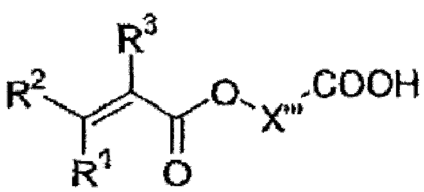

・・・(2)

wobei
$R^1$, $R^2$ und $R^3$ jeweils unabhängig ein Wasserstoffatom, ein Chloratom oder eine Alkylgruppe sind, die 1 bis 5 Kohlenstoffatome aufweist, und X"' eine atomare Gruppe ist, die ein Molekulargewicht von nicht mehr als 456 aufweist, eine Hauptkette von welcher aus 1 bis 18 Atomen konstruiert ist.

**3.** Formkörper nach Anspruch 1, wobei die Verbindung, die durch die Formel (1) dargestellt ist, mindestens eine Verbindung ist ausgewählt unter Acryloyloxyethylsuccinat und Carboxyethylacrylat.

**4.** Formkörper nach einem der Ansprüche 1 bis 3, wobei die inhärente Viskosität (logarithmische Viskosität bei 30 °C einer Lösung, die durch Lösen von 4 g Harz in 1 Liter N,N-Dimethylformamid erhalten worden ist) des Copolymers auf der Basis von Vinylidenfluorid 0,3 bis 5,0 dl/g beträgt.

**5.** Formkörper nach einem der Ansprüche 1 bis 4, wobei ein Absorptionsgradverhältnis ($A_R$), durch die Gleichung (I) unten ausgedrückt, das durch Messen eines Infrarotabsorptionsspektrums eines Copolymer auf der Basis von

Vinylidenfluorid erhalten worden ist, 0,01 bis 3,0 beträgt:

$$A_R = A_{1700\text{-}1800}/A_{3023} \ldots\ldots \text{(I)}$$

wobei
$A_{1700\text{-}1800}$ der Absorptionsgrad ist, der aus einer Streckschwingung von Carbonylgruppen stammt, die in einem Bereich von 1700 bis 1800 $cm^{-1}$ erfasst worden ist, und $A_{3023}$ der Absorptionsgrad ist, der von einer CH-Streckschwingung von CH stammt, die in der Nähe von 3023 $cm^{-1}$ erfasst worden ist, wobei das Infrarotabsorptionsspektrum des Polymers in einer Folie gemessen wird, die durch Heißpressen des Copolymers auf der Basis von Vinylfluorid bei 200 °C hergestellt worden ist, um eine gepresste Platte von 30 mm x 30 mm herzustellen, und das IR-Spektrum dieser gepressten Platte im Bereich von 1500 $cm^{-1}$ bis 4000 $cm^{-1}$ unter Anwendung eines von Horiba, Ltd. hergestellten Infrarotspektrophotometers FT-730 gemessen wird.

6. Formkörper nach einem der Ansprüche 1 bis 5, wobei der Formkörper eine Platte, Folie, ein Strang, eine Faser oder eine Röhre ist.

7. Formkörper nach einem der Ansprüche 1 bis 6, wobei der Formkörper eine Schicht, die durch Schmelzformen des Copolymers auf der Basis von Vinylidenfluorid erhalten worden ist, und eine Schicht aufweist, die aus einem thermoplastischem Harz gebildet worden ist, bei dem es sich nicht um das Copolymer auf der Basis von Vinylidenfluorid handelt.

8. Formkörper nach Anspruch 7, wobei die Schicht, die durch Schmelzformen des Copolymers auf der Basis von Vinylidenfluorid erhalten worden ist, und die Schicht, die aus einem thermoplastischen Harz gebildet worden ist, bei dem es sich nicht um ein Copolymer auf der Basis von Vinylidenfluorid handelt, durch Coextrusion geformt werden.

9. Formkörper nach Anspruch 7, wobei der Formkörper durch Laminieren der Schicht, die durch Schmelzformen des Copolymers auf der Basis von Vinylidenfluorid erhalten worden ist, und der Schicht, die aus einem thermoplastischen Harz gebildet worden ist, bei dem es sich nicht um ein Copolymer auf der Basis von Vinylidenfluorid handelt, geformt wird.

**Revendications**

1. Article moulé obtenu par moulage à l'état fondu d'un copolymère à base de fluorure de vinylidène obtenu par copolymérisation de fluorure de vinylidène et d'un composé représenté par la formule (1) ci-dessous:

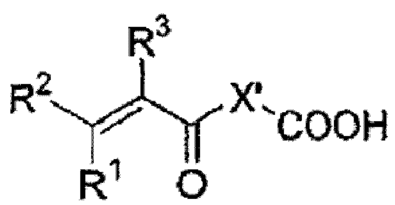

• • • (1)

où
$R^1$, $R^2$ et $R^3$ sont chacun indépendamment un atome d'hydrogène, un atome de chlore ou un groupe alkyle ayant de 1 à 5 atomes de carbone, et X' est un groupe atomique ayant un poids moléculaire non supérieur à 472, dont une chaîne principale est construite à partir de 1 à 19 atomes.

2. Article moulé selon la revendication 1, où le composé représenté par la formule (1) est un composé représenté par la formule (2):

[Formula 2]

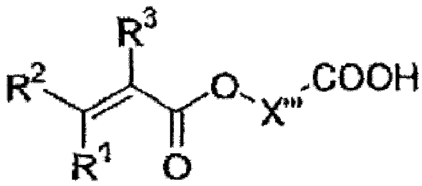

$$\cdots (2)$$

où

$R^1$, $R^2$ et $R^3$ sont chacun indépendamment un atome d'hydrogène, un atome de chlore ou un groupe alkyle ayant de 1 à 5 atomes de carbone, et X''' est un groupe atomique ayant un poids moléculaire non supérieur à 456, dont une chaîne principale est construite à partir de 1 à 18 atomes.

**3.** Article moulé selon la revendication 1, où le composé représenté par la formule (1) est au moins un composé sélectionné parmi le succinate d'acryloyloxyéthyle et l'acrylate de carboxyéthyle.

**4.** Article moulé selon l'une quelconque des revendications 1 à 3, où l'indice limite de viscosité (indice logarithmique de viscosité à 30°C d'une solution obtenue par dissolution de 4 g de résine dans 1 litre de N,N-diméthylformamide) du copolymère à base de fluorure de vinylidène est de 0,3 à 5,0 dl/g.

**5.** Article moulé selon l'une quelconque des revendications 1 à 4, où un rapport d'absorbance ($A_R$) exprimé par l'équation (I) ci-dessous obtenu par la mesure d'un spectre d'absorption infrarouge d'un copolymère à base de fluorure de vinylidène est de 0,01 à 3,0:

$$A_R = A_{1700\text{-}1800}/A_{3023} \ldots \text{(I)}$$

où

$A_{1700\text{-}1800}$ est l'absorbance provenant de la vibration d'étirage des groupes carbonyle détectée dans une plage de 1 700 à 1 800 $cm^{-1}$, et $A_{3023}$ est l'absorbance provenant de la vibration d'étirage de CH des CH détectée près de 3 023 $cm^{-1}$, moyennant quoi le spectre d'absorption infrarouge du polymère est mesuré dans un film produit par pressage à chaud du copolymère à base de fluorure de vinylidène à 200°C pour produire une feuille pressée de 30 mm x 30 mm, et le spectre IR de cette feuille pressée est mesuré dans la plage de 1 500 $cm^{-1}$ à 4 000 $cm^{-1}$ en utilisant le spectrophotomètre infrarouge FT-730 fabriqué par Horiba, Ltd.

**6.** Article moulé selon l'une quelconque des revendications 1 à 5, où l'article moulé est une feuille, un film, un brin, une fibre ou un tube.

**7.** Article moulé selon l'une quelconque des revendications 1 à 6, où l'article moulé présente une couche obtenue par moulage à l'état fondu du copolymère à base de fluorure de vinylidène et une couche formée à partir d'une résine thermoplastique autre que le copolymère à base de fluorure de vinylidène.

**8.** Article moulé selon la revendication 7, où la couche obtenue par moulage à l'état fondu du copolymère à base de fluorure de vinylidène et la couche formée à partir d'une résine thermoplastique autre qu'un copolymère à base de fluorure de vinylidène sont moulées par co-extrusion.

**9.** Article moulé selon la revendication 7, où l'article moulé est moulé par stratification de la couche obtenue par moulage à l'état fondu du copolymère à base de fluorure de vinylidène et de la couche formée à partir d'une résine thermoplastique autre qu'un copolymère à base de fluorure de vinylidène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0631877 A
- JP H0615790 A
- JP 2005162330 A
- JP 2005207582 A
- JP H06172452 A
- WO 2009084483 A